# EUROPEAN PATENT APPLICATION

(11) **EP 3 217 240 A1**
(43) Date of publication of application: **13.09.2017**
(21) Application number: 16305255.8
(22) Date of filing: 07.03.2016
(51) Int. Cl.: G05B 19/418

(54) **DATA COMMUNICATION BUS FOR A ROBOT**

(71) Applicant: Aldebaran Robotics, 75015 Paris (FR)
(72) Inventor: SMAL, Ludovic, 75015 Paris (FR); SERRE, Julien, 75015 Paris (FR)
(74) Representative: Hnich-Gasri, Naïma

(57) **Abstract**

There is disclosed a system comprising a data communication bus comprising one or more modified complex programmable logic devices, wherein a modified complex programmable logic devices is adapted to communicate data frames at different communication speeds simultaneously. Developments of the invention describe the use of one or more master devices interconnected with one or more heterogeneous slave devices associated with a plurality of communication rate/speed requirements, the use of predefined firmware programs, the use of sensors and/or actuators, the use of one or more high speed and bidirectional Serializer/Deserializer circuits and the use of low-voltage differential signaling amplifiers.

## Description

### Technical Field

This patent relates to the field of digital data processing and more particularly to systems and methods of data communication in a robot.

### Background

In current robotic systems, peripheral devices sharing a same communication bus must exchange data at the same communication rate. In order to have different communication rate speeds, different buses are required.

Implementing a plurality of communication buses in a robot can be expensive and can result in a complex and potentially unstable system.

Existing approaches comprise limitations for a use in a robot (be it an industrial or a companion robot).

Some components like Ethernet are standardized, but work only for certain classes of interconnected peripherals or devices. In addition, Ethernet generally does not provide mechanisms to adapt to a variable communication rate. Using PHY is not workable for low end or commodity devices. Approaches like CAN/flexRay are associated with limitations in bandwidth, which renders these solutions not suitable for video uses, for example.

An approach like EtherCAT presents pros and cons for use in a robot. EtherCAT - (Ethernet for Control Automation Technology) is an Ethernet-based "fieldbus" system. A fieldbus is the name of a family of industrial computer network protocols used for real-time distributed control, standardized as IEC 61158. A complex automated industrial system usually needs a distributed control system, i.e. an organized hierarchy of controller systems. Part of the control chain is the fieldbus that links the PLCs to the components that actually do the work, such as sensors, actuators, electric motors, console lights, switches, valves and contactors. In some circumstances, this EtherCAT approach presents limitations.

### Summary

There is disclosed a system comprising a data communication bus comprising one or more complex programmable logic devices, wherein a complex programmable logic devices is adapted or configured to communicate data frames at different communication speeds simultaneously. Developments of the invention comprise the use of one or more master devices interconnected with one or more heterogeneous slave devices associated with a plurality of communication rate/speed requirements, the use of predefined firmware programs, the use of sensors and/or actuators, the use of one or more high speed and bidirectional Serializer/Deserializer circuits and the use of low-voltage differential signaling amplifiers.

There is disclosed a system comprising a data communication bus comprising a modified complex programmable logic device CPLD, wherein said modified CPLD is adapted to communicate data frames at different communication speeds simultaneously.

In a development, the system further comprises at least one master device interconnected with one or more heterogeneous slave devices associated with a plurality of communication rate/speed requirements.

In a development, the master device is adapted to store a plurality of predefined firmware programs; and wherein one or more slave devices comprise a non-volatile memory adapted to at least one firmware program.

In a development, the master device is adapted to control one or more slave devices by flashing their respective firmware (or firmware programs).

In a development, the master device comprises a volatile memory buffer, an access to valid clock information, an interface to interconnect a microprocessor µP or a microcontroller µC, and a hardware circuit to collect a token to determine read and/or write operations in the volatile memory buffer.

In a development, the master device comprises at least a microprocessor with a communication interface (Ethernet, EtherCAT) and a flash memory. In a development, the master device comprises other peripheral components.

In a development, the system further comprises one or more sensors and/or one or more actuators.

In a development, the modified CPLD comprises a high speed and bidirectional Serializer/Deserializer with an embedded logic and a LVDS amplifier.

Advantageously, the methods and systems according to the invention enable or facilitate the coexistence of peripherals associated with different bandwidth requirements, without requiring an ascending compatibility of said devices.

Advantageously, the invention can be coupled with Ethernet networks and/or devices communicating according to such a specific Ethernet protocol.

Advantageously, the data communication bus according to the invention enables coexistence of heterogeneous devices in a same network. Most of the existing communication buses (*"fieldbus"*) are synchronous buses. Such buses cannot interface with devices of another generation (or the data communication rate must be aligned to the smallest common denominator shared by all the interconnected devices). In an aspect of the invention, the data communication bus according to the invention enables the interoperability of different classes of devices.

Advantageously, the invention allows the interaction of different heterogeneous devices on the same topology network (e.g. high speed devices interacting simultaneously with low-speed devices), therefore optimizing the global robotic system and reducing architectural costs.

Advantageously, the bus according to the invention uses a dedicated hardware circuit, whose complexity is controlled. Such a data communication bus can easily be integrated in an ASIC circuit or in a programmable component.

### Brief description of drawings

Embodiments of the present invention will now be described by way of example with reference to the accompanying drawings in which like references denote similar elements, and in which:
Figure 1 illustrates the network topology of a robot according to the invention;
Figure 2 illustrates the network topology of a robot according to the invention;
Figure 3 details some aspects of an embodiment of the method;
Figure 4 details an exemplary embodiment of a router according to the invention.

### Detailed description

To facilitate the understanding of certain embodiments, the following definitions are provided.

Data exchanged in the system according to the invention can be "network packets" (formatted unit of data carried by a packet-switched network) or "data frames" or a signal or a "bit stream" (such as traditional point-to-point telecommunications links).

In computing, the term "bandwidth" (network bandwidth or data bandwidth or digital bandwidth) designates the bit-rate of available or consumed information capacity generally expressed in bits per second.

In the field of signal processing, wireless communications, modem data transmission, digital communications, the term "bandwidth" is used to refer to analog signal bandwidth measured in hertz, designating the frequency range between the lowest and highest attainable frequency while meeting a well-defined impairment level in signal power. According to Hartley's law, the digital data rate limit, or channel capacity, of a physical communication link is proportional to its bandwidth in hertz.

The bus according to the invention, hereinafter called "µQi", is a specific data communication bus.

In a computer architecture, a "bus" designates a communication system that transfers data between components inside a computer, or between computers. This expression covers all related hardware components (wire, optical fiber, etc.) and software, including communication protocols.

The bus according to the invention enables two-way communication with heterogeneous devices, both low-speed and hi-speed devices.

With such a data communication bus, the data communication rate can be adapted to the bandwidth or communication rate of a given device. This property enables the coexistence, in a same system, of high-end slave devices requiring an important bandwidth, with low-end slave devices, which cannot communicate at high-speed.

In particular, the bus enables to interconnect one or more master devices (or nodes) to one or more slave devices (or nodes) in an asynchronous way.

In an embodiment, the bus comprises a gateway adapted to the Ethernet protocol. The bus thus can be connected to any device supporting this protocol. Advantageously, this compatibility feature is economical.

The bus communicates with one or more master devices and one or more slave devices.

A master device for example can comprise a microprocessor, communicating with slave devices. In such an embodiment, the master device comprises an Ethernet interface.

In an embodiment, the master device can comprise necessary and sufficient information about bandwidth requirements of slave devices (in particular, the communication speed rate associated with each of said slave devices). The network topology and properties of the constituents being known, the master device can communicate synchronously with slave devices associated with it.

Several master nodes can share a same bus, but each slave device interacts with one and only one master device. The master device warrants that the communication frequency used to exchange data with a given slave device does not exceed its capacity. The data communication frequency is proportional to the maximal speed selected for the fastest slave device associated with the bus.

The data communication bus according to the invention is associated with at least two functionalities. It is adapted to enumerate (i.e. to count and further characterize or determine the properties of) the different mother boards or hardware circuits of the devices part of the regulated system (i.e. the robot). It is also adapted to exchange data at different communication rates. In particular, the bus can automatically adapt to the communication rate recommended or accepted by each device, i.e. even if the backbone does work at other speed factors.

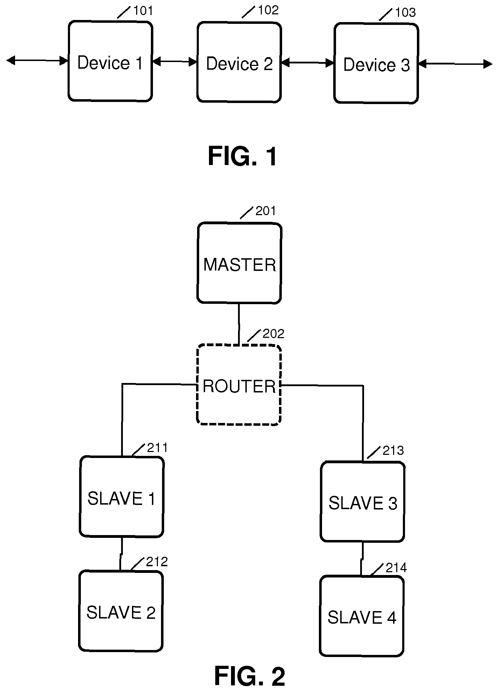

Figure 1 illustrates the network structure in a robot according to the invention.

The figure shows exemplary devices (101, 102, 103), arranged in a serial scheme. Slave devices are interconnected in a serial manner: the bus is connected to a slave device as an input and as an output of said slave device.

Each device can analyze the propagated signal or data being communicated (the "bitstream") or "frame" and, depending on another analysis, can determine whether the received data - or a part thereof - must be propagated downstream. If applicable, the bitstream or part of it can be transmitted to the next neighbor or node.

Moreover, each device along the path can modify the bitstream or signal. For example, due to this characteristic, a structured addressing of the different devices can be performed on the bus. For example, as long as the device 1 is not associated with a network address, the device does not forward any information or message; as soon as such an address is obtained, the device can authorize the communication of information (i.e. the bitstream to be passed along).

Figure 2 illustrates the mapping of hardware circuits in a robot using the bus according to the invention.

Step-by-step, device after device, peer after peer, a unique address can be allocated to each motherboard of each device part of the global system. Therefore, a precise and exact mapping of all hardware circuits or parts of a robot can be determined.

After the step of enumerating the different parts of the robots, each device is associated with a unique address with respect to the communication bus.

The master device can send to each slave device a request aiming at discovering to which communication rate the device is working. In an embodiment, the communication rate is required by the slave device. In an embodiment, communication rate ranges can be indicated (e.g. measure errors, tolerances, sub-optimal conditions, etc).

At the end of the discovery cycle, the master device does know the network topology and the requirements of each part of the network. As a result, the number of communication rates is not limited, and the master device can determine a set of discrete communication rates to be simultaneously used for communicating data within the robot.

In the example shown figure 2, the master device 201 discovers slave devices 211, 212, 213 and 214 via the router 202. The router 202 according to invention is an OSI layer 2 (network) router. The data link layer provides the functional and procedural means to transfer data between network entities. It can detect and possibly correct errors which may occur in the physical layer.

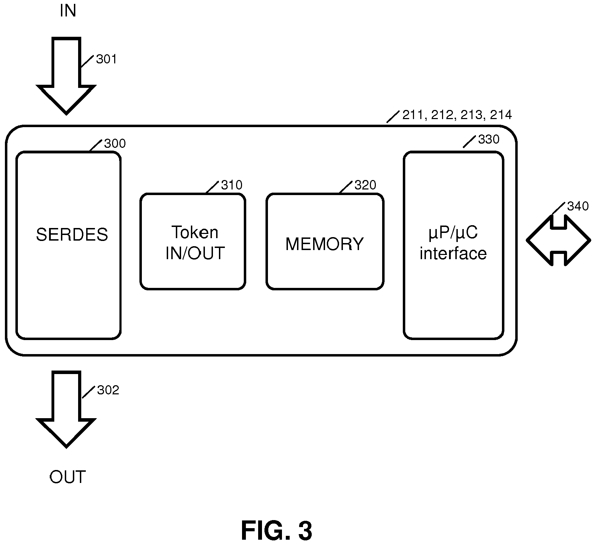

Figure 3 shows an example of a possible architecture of a device implemented in the robot.

In some embodiments, the system according to the invention can use one or more Serializer/Deserializer (SerDes).

A Serializer/Deserializer (SerDes) is a pair of functional blocks used in high speed communications to compensate for limited input/output. These blocks convert data between serial data and parallel interfaces in each direction. The term "SerDes" generically refers to interfaces used in various technologies and applications. The primary use of a SerDes is to provide data transmission over a single/differential line in order to minimize the number of I/O pins and interconnects.

According to the invention, such SerDes circuits can be modified from existing and inexpensive devices off the shelf to enable field bus uses. Some existing systems (e.g. camera, display) indeed use low voltage differential bus to perform communication tasks.

A "SerDes" according to the invention comprises i) an embedded logic, ii) a LVDS amplifier and iii) an optional EMI (Electromagnetic interference) filter, which are added to a) a high speed SerDes provided with b) input and output interface.

Low-voltage differential signaling, or LVDS, also known as TIA/EIA-644, is a technical standard that specifies electrical characteristics of a differential, serial communications protocol. LVDS operates at low power and can run at very high speeds using inexpensive twisted-pair copper cables.

The SerDes modified according to the invention is used to send clock information.

Advantageously, there can be obtained a true or reliable field bus, which is advantageously a) bidirectional b) immune to electromagnetic disturbances c) a reliable synchronous/asynchronous bus and d) and which is not expensive.

As shown figure 3, an exemplary slave device (211,212,213,214) comprises a SerDes transceiver 300 to communicate with the field bus (i.e. the signal or the bitstream), for example according to a differential bus (LVDS or BLVDS). Each slave device receives valid clock information. Each slave device comprises an interface 330 to interconnect to/with a microprocessor µP or a microcontroller µC, for example according to a serial or a parallel connection. Each slave device comprises a hardware circuit 310 to decode a token to determine read and/or write operations in the memory 320.

The bus according to the invention is a modified complex programmable logic device (CPLD), which is a programmable logic device. CPLD in particular comprise a non-volatile configuration memory (CPLD can function immediately on system start-up) and a plurality of logic gates available. The characteristic of non-volatility enables a CPLD device to perform "boot loader"-like functions before handing over control to other devices not having this capability. A "boot loader" generally designates a computer program which loads a software program after completion of the power-on self-tests. A boot loader is generally loaded into main memory from persistent memory. In the present case, the non-volatile memory enables the CPLD devices to be ready as soon as power-on self-tests do finish. The field bus is ready to communicate independently of the state of the µP/µC connected to it and in particular, it doesn't use resource of the microcontroller (µC) or of the microprocessor (µP) to be able to do its function.

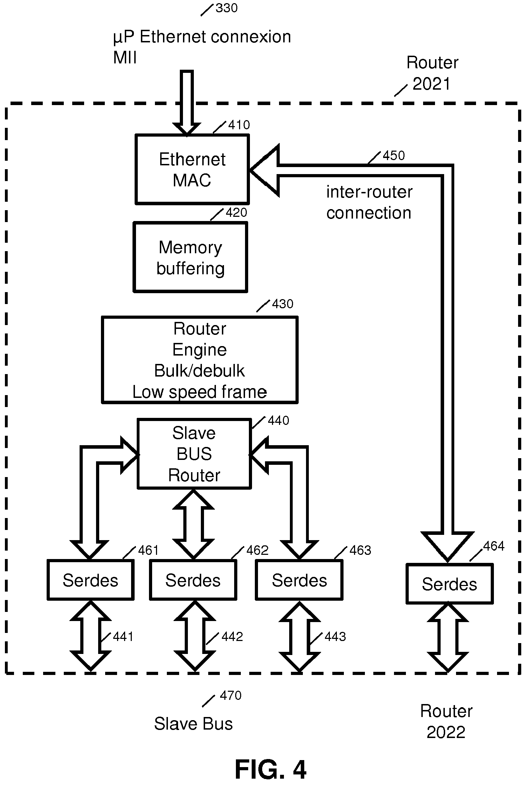

Figure 4 details an embodiment of the router 202 according to the invention.

The router 202 is an OSI layer 2 router. An example of such a router 202 is shown (router 2021 of figure 4). The exemplary router 2021 is connected to a microprocessor 330 by an Ethernet MAC 410 (optionally interconnected to another router 2022). The system according to the invention can comprise a plurality of slave devices, a plurality of master devices and also a plurality of routers. The router 2021 can also comprise a memory block 420, a router logic 430 and a slave bus router 440 (with interfaces 441, 442, 443 with a slave bus 470) each interface can use a SerDes (461,462,463 and 464 in the example).

The disclosed methods can take form of an entirely hardware embodiment (e.g. FPGA), an entirely software embodiment or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or any instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

## Claims

1. A system comprising a data communication bus comprising a complex programmable logic device, wherein said complex programmable logic device is configured to communicate data frames at different communication speeds simultaneously.

2. The system of claim 1, further comprising at least one master device interconnected with one or more heterogeneous slave devices associated with a plurality of communication rate/speed requirements.

3. The system of claim 2, wherein the master device is adapted to store a plurality of predefined firmware programs and wherein one or more slave devices comprise a non-volatile memory adapted to store at least one firmware program.

4. The system of claim 3, wherein the master device is adapted to control one or more slave devices by flashing their respective firmware programs.

5. The system of any one of claims 2 to 4, wherein the master device comprises a volatile memory buffer, an access to valid clock information; an interface to interconnect a microprocessor or a microcontroller, and a hardware circuit configured to collect a token to determine read and/or write operations in the volatile memory buffer.

6. The system of any one of claims 2 to 4, wherein the master device comprises at least a microprocessor with a communication interface and a flash memory.

7. The system of any preceding claim, further comprising one or more sensors and/or one or more actuators.

8. The system of any preceding claim, wherein the complex programmable logic device comprises a high speed and bidirectional Serializer/Deserializer with an embedded logic and a low-voltage differential signaling amplifier.
